# EUROPEAN PATENT APPLICATION

(11) **EP 2 261 791 A2**
(43) Date of publication of application: **15.12.2010**
(21) Application number: 09175255.0
(22) Date of filing: 06.11.2009
(51) Int. Cl.: G06F 3/06

(54) **Embedded private scale out network**

(30) Priority: 09.06.2009 US 481389
(71) Applicant: LSI Corporation, Milpitas, CA 95035 (US)
(72) Inventor: Dekoning, Rodney A., Wichita KS 67230 (US); Nichols, Charles E., Wichita KS 67206 (US); Delaney, William Patrick, Wichita KS 67230 (US); El-Batal, Mohamad, Westminster CO 80031 (US); Holt, Keith, Wichita KS 67230 (US)
(74) Representative: Williams, David John

(57) **Abstract**

Disclosed is a storage array system. N array controllers are configured with at least two interconnect fabric ports, where N is an integer greater than two. A JBOD unit is configured with at least two interconnect fabric switches. The two interconnect fabric switches each have at least N interconnect fabric ports. Each of the least N of the interconnect fabric ports are directly connected to a corresponding one of the N array controllers, thereby establishing direct redundant connectivity between each of the N array controllers and each other of the N array controllers.

## Description

### BACKGROUND OF THE INVENTION:

Mass storage systems continue to provide increased storage capacities to satisfy user demands. Photo and movie storage, and photo and movie sharing are examples of applications that fuel the growth in demand for larger and larger storage systems.

A solution to these increasing demands is the use of arrays of multiple inexpensive disks. These arrays may be configured in ways that provide redundancy and error recovery without any loss of data. These arrays may also be configured to increase read and write performance by allowing data to be read or written simultaneously to multiple disk drives. These arrays may also be configured to allow "hot-swapping" which allows a failed disk to be replaced without interrupting the storage services of the array. Whether or not any redundancy is provided, these arrays are commonly referred to as redundant arrays of independent disks (or more commonly by the acronym RAID). The 1987 publication by David A. Patterson, et al., from the University of California at Berkeley titled "A Case for Redundant Arrays of Inexpensive Disks (RAID)" discusses the fundamental concepts and levels of RAID technology.

RAID storage systems typically utilize a controller that shields the user or host system from the details of managing the storage array. The controller makes the storage array appear as one or more disk drives (or volumes). This is accomplished in spite of the fact that the data (or redundant data) for a particular volume may be spread across multiple disk drives.

### SUMMARY OF THE INVENTION:

An embodiment of the invention may therefore comprise a storage array system, comprising: N array controllers configured with at least two interconnect fabric ports, where N is an integer greater than two; a first and second interconnect fabric switch integrated into an environmental services module (ESM), each of said first and second interconnect fabric switches having at least N interconnect fabric ports, each of said N interconnect fabric ports being connected to an interconnect fabric port on one of said N array controllers thereby establishing redundant connectivity between each of said N array controllers.

An embodiment of the invention may therefore further comprise a storage array architecture for a storage array, comprising: at least two array controllers each having at least two integrated interconnect fabric switches; a JBOD unit with at least two integrated interconnect fabric switches, each of said at least two integrated interconnect fabric switches being directly connected to each of said at least two array controllers at least two times thereby establishing at least two direct connections between each of said integrated interconnect fabric switches and each of said at least two array controllers.

### BRIEF DESCRIPTION OF THE DRAWINGS:

Figure 1 is a block diagram of a storage array system.

Figure 2 is a block diagram of a storage array system.

Figure 3 is a block diagram of a computer system.

### DETAILED DESCRIPTION OF THE EMBODIMENTS:

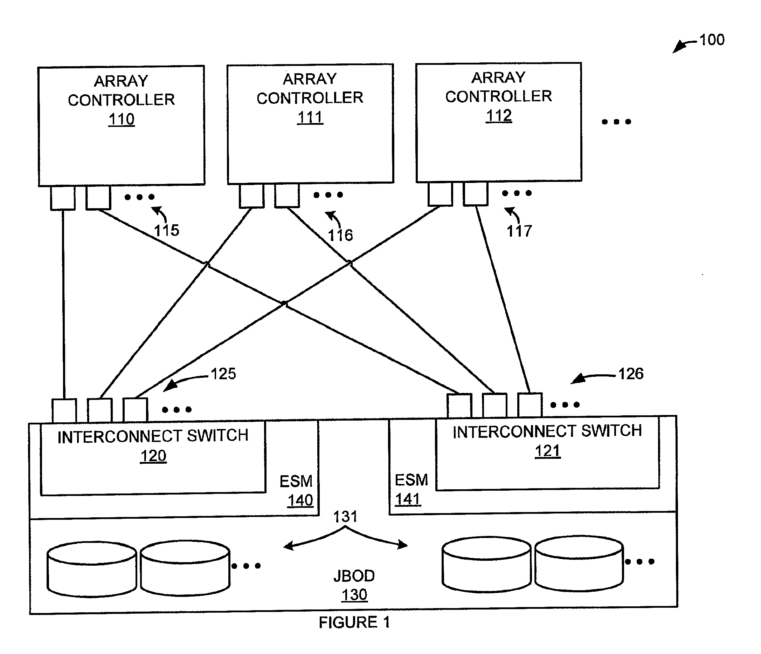

Figure 1 is a block diagram of a storage array system. In Figure 1, storage system 100 comprises array controller 110, array controller 111, array controller 112, and Just a Bunch of Disks enclosure (JBOD) 130. Array controller 110 includes a plurality of interconnect fabric ports 115. Array controller 111 includes a plurality of interconnect fabric ports 116. Array controller 112 includes a plurality of interconnect fabric ports 117. In Figure 1, only three array controllers 110-112 are shown. This is for the sake of brevity. It should be understood that additional array controllers 110-112 may be included in storage system 100.

JBOD 130 includes environmental services module (ESM) 140 and ESM 141. ESM 140 includes interconnect switch 120. ESM 141 includes interconnect switch 121. In an embodiment, ESM 140 and ESM 141 are integrated into the same system level packaging as the rest of JBOD 130. Thus, interconnect switch 120 and interconnect switch 121, by virtue of being included in ESM 140 and ESM 141 are also integrated into the same system level packaging as the rest of JBOD 130. JBOD 130 may also include disk drives 131. Interconnect switch 120 includes a plurality of interconnect fabric ports 125. Interconnect switch 121 includes a plurality of interconnect fabric ports 126.

One of the plurality of interconnect fabric ports 125 is directly connected to one of interconnect fabric ports 115. One of the plurality of interconnect fabric ports 125 is directly connected to one of interconnect fabric ports 116. One of the plurality of interconnect fabric ports 125 is directly connected to one of interconnect fabric ports 117. One of the plurality of interconnect fabric ports 126 is directly connected to one of interconnect fabric ports 115. One of the plurality of interconnect fabric ports 126 is directly connected to one of interconnect fabric ports 116. One of the plurality of interconnect fabric ports 126 is directly connected to one of interconnect fabric ports 117. Thus, interconnect switch 120 and interconnect switch 121 provide redundant interconnect paths between each array controller 110-112 and each other array controller 110-112 via interconnect switch 120 and interconnect switch 121.

In Figure 1, only one JBOD 130 is shown. This is for the sake of brevity. It should be understood that additional JBODs may be included in storage array 100. It should also be understood that these additional JBODs may have alternative configurations. For example, these additional JBODs may have a differ number of ESMs, interconnect fabric ports, and/or interconnect switches. Likewise, JBOD 130 is shown in Figure 1 with ESM 140 and 141 each with a single interconnect switch 120 and 121, respectively. This is also for the sake of brevity. It should be understood that additional ESMs 140-141 may be included in JBOD 130. Likewise, additional interconnect switches 120-121 may be included in one or more ESMs 140-141.

Interconnect ports 115-117 and 125-126 are connected to form an interconnect fabric that is dedicated to communication between array controllers 110-112. This interconnect fabric may also be known as a private scale out network (PSON). This interconnect fabric may also be used to interconnect JBODs. The PSON interconnect fabric formed by interconnecting the interconnect ports 115-117 of array controllers 110-112 and the interconnect ports 125-126 of interconnect switches 120-121 may be implemented using one of several storage interconnect fabrics. For example, the PSON interconnect fabric may be implemented using connections, ports, and protocols specified by serial attached SCSI (SAS), InfiniBand, Ethernet, or PCI-Express. Other interconnect fabric technologies may be used.

Array controllers 110-112 may be, or comprise, controllers that are compatible with or described by, for example, InfiniBand, Redundant Array of Inexpensive Disks (RAID), Network Attached Storage (NAS), Storage Array Network (SAN), iSCSI SAN, or a Virtual Tape Library (VTL). JBOD 130 may be, or comprise, one or more Just a Bunch Of Disks or Just a Box Of Drives in an enclosure with other hardware. ESMs 140-141 may provide expander and environmental services monitoring and management functionality associated with JBOD 130.

In an embodiment, storage system 100 has N number of array controllers 110-112. JBOD 130 has M number of ESMs 140-141 with interconnect switches 120-121, with at least N interconnect ports. M may be an integer greater than or equal to one. As can be seen in Figure 1, each array controller 110-112 is connected to each interconnect switch 120-121 at least once. Thus, in Figure 1, M is equal to two.

The two connections between each array controller 110-112 and each JBOD 130 (one to interconnect switch 120 and one to interconnect switch 121) establish direct redundant connectivity between each of the array controllers 110-112 and each other array controller 110-112. For example, this is illustrated in Figure 1 by the first connection between array controller 110 and interconnect switch 120 and the second connection between array controller 110 and interconnect switch 121. This is also illustrated by the first connection between array controller 111 and interconnect switch 120 and a second connection between array controller 111 and interconnect switch 121. Finally, a first connection is shown between array controller 112 and interconnect switch 120 and a second is shown between array controller 112 and interconnect switch 121. It should be understood that these connections are direct connections and do not pass through an additional switching fabric external to JBOD 130 or other intermediate device.

In an embodiment, each array controller 110-112 may be connected to JBOD 130 more than two times with the addition of additional ESMs 140-141 to JBOD 130 or additional interconnect switches 120-121 to ESMs 140-141. In another embodiment, each array controller 110-112 may be connected to each other array controller 110-112 using multiple JBODs 130 with one or more ESMs 140-141 each having one or more interconnect switches 120-121.

Because each array controller 110-112 is interconnected with each other array controller 110-112 via interconnect switches 120-121, dedicated data transfers from array controller 110-112 to array controller 110-112 are possible.

Also, because interconnect switches 120-121 are integrated into JBOD 130 by virtue of their inclusion in ESMs 140-141, they do not take up additional rack space in storage system 100. The integrated nature of interconnect switches 120-121 also allows the status of interconnect switches 120-121 to be monitored as part of JBOD 130's ESM functions. The packaging, cooling, power, fans, environmental functions, and other infrastructure functions of JBOD 130 may be used to provide one or more of these infrastructure functions to interconnect switches 120-121 as well as ESMs 140-141.

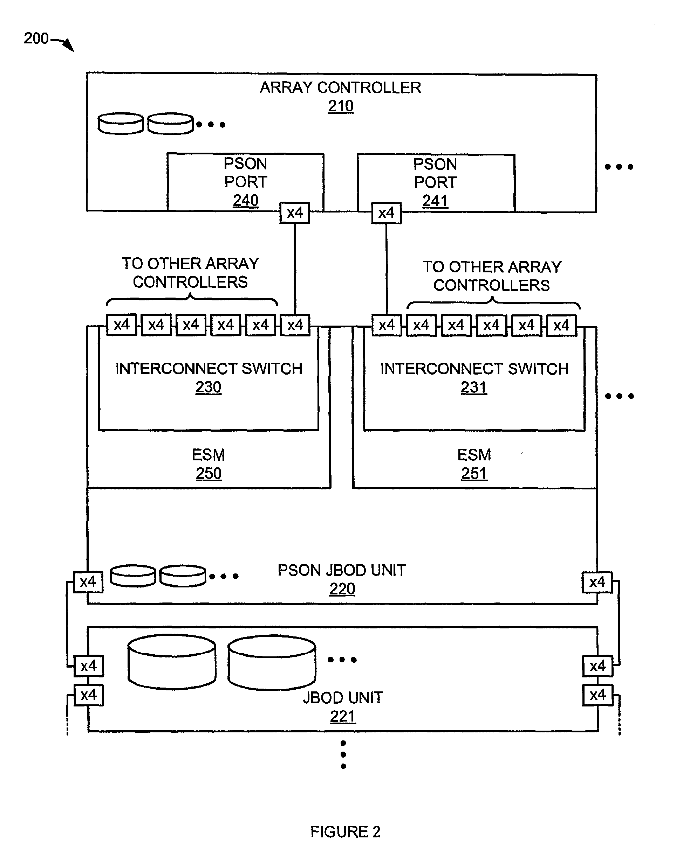

Figure 2 is an illustration of a storage array system. Figure 2 illustrates the connections between one array controller 210 and one set of interconnect switches to 230-231. It should be understood that other array controllers, JBOD units (not shown), or PSON JBOD units (not shown) may be connected to array controller 210. These have been omitted for the sake of brevity. The connections between array controller 210 and JBOD units 220-221 may be similar or the same as those illustrated in Figure 1.

In Figure 2, array controller 210 includes at least PSON port 240 and PSON port 241. Array controller 210 also may include disk drives. PSON port 240 and PSON port 241 each include at least one interconnect port. In Figure 2, PSON port 240 and PSON port 241 are each shown as 4-wide ports. It should be understood that this is for illustration purposes only and other width ports are contemplated. It should also be understood that PSON port 240 and PSON port 241 would typically have at least 2M ports, where M is the number of PSON JBOD units 220 in storage system 200.

PSON JBOD unit 220 includes ESM 250 and ESM 251. ESM 250 includes interconnect switch 230. ESM 251 includes interconnect switch 231. Thus, PSON JBOD unit 220 includes interconnect switch 230 and interconnect switch 231. PSON JBOD unit 220 and JBOD unit 221 may also include disk drives. Interconnect switch 230 and interconnect switch 231 each include interconnect ports. In Figure 2, interconnect switch 230 and interconnect switch 231 each have six 4-wide interconnect ports. It should be understood that this is for illustration purposes only and that interconnect switch 230 and interconnect switch 231 would typically have at least N ports, where N is the number of array controllers 210 in storage system 200. PSON JBOD unit 220 may also include additional interconnect ports. These interconnect ports are connected to JBOD unit 221. These interconnect ports may be provided by interconnect switch 230 and/or interconnect switch 231. JBOD unit 221 may be also connected to additional JBOD units (not shown).

In an embodiment, an interconnect port of interconnect switch 230 is directly connected to an interconnect port of PSON port 240. An interconnect port of interconnect switch 231 is directly connected to an interconnect port of PSON port 241. Thus, PSON JBOD unit 220 is directly and redundantly connected to array controller 210. Likewise, PSON JBOD unit 220 may be also directly connected by at least two direct connections to every other array controller 210 in storage system 200 (not shown). Thus, each array controller 210 in storage system 200 is redundantly connected to each other array controller 210 in storage system 200. PSON JBOD unit 220, JBOD unit 221, and other devices such as port expanders and disk drives may be placed in a single or multiple enclosures or racks to form storage system 200.

As can be seen in Figure 1 and Figure 2 multiple array controllers 110-112 and 210 may be directly and redundantly connected to each other without the use of external switching, while still providing redundant any controller to any controller device connectivity. The performance of storage system 100 and 200 scale as array controllers are added. Likewise, when one or more elements of the storage system 100 and 200 fail or are removed for service, the performance is only reduced in a linear fashion. For example, if the N=6 (i.e., there are 6 array controllers 110-112 in a system), and an array controller fails, the performance of storage system 100 or 200 will only be reduced to approximately 5/6 of its previous level. Compare this to a system with only two array controllers 110-112 whose performance will be reduced to approximately ½ of its previous level when one array controller fails. In addition, because there are direct connections between each array controller 110-112 or 210 separate interconnect fabric switches between controllers are avoided. These separate interconnect fabric switches increase cost and take up packaging space.

The systems, units, drives, devices, equipment, and functions described above may be implemented with or executed by one or more computer systems. The methods described above may also be stored on a computer readable medium. Many of the elements of storage system 100, and storage system 200 may be, comprise, or include computers systems. This includes, but is not limited to array controller 110, array controller 111, array controller 112, JBOD 130, interconnect switch 120, interconnect switch 121, ESM 140, ESM 141, array controller 210, PSON JBOD unit 220, JBOD unit 221, ESM 250, ESM 251, interconnect switch 230, interconnect switch 231, PSON port 240, PSON port 241, and any disk drives encompassed in storage system 100 or storage system 200.

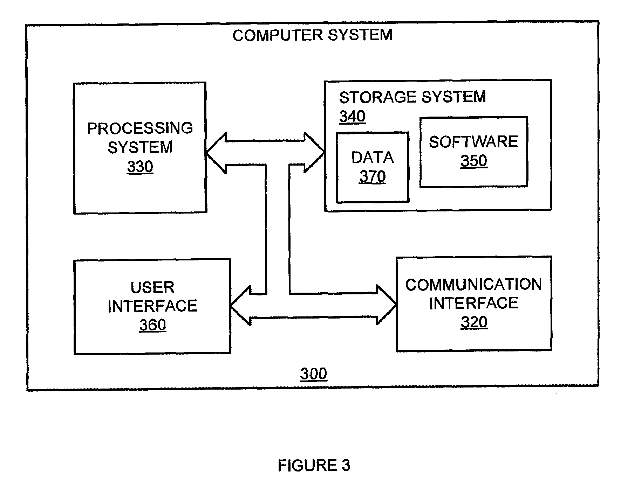

Figure 3 illustrates a block diagram of a computer system. Computer system 300 includes communication interface 320, processing system 330, storage system 340, and user interface 360. Processing system 330 is operatively coupled to storage system 340. Storage system 340 stores software 350 and data 370. Processing system 330 is operatively coupled to communication interface 320 and user interface 360. Computer system 300 may comprise a programmed general-purpose computer. Computer system 300 may include a microprocessor. Computer system 300 may comprise programmable or special purpose circuitry. Computer system 300 may be distributed among multiple devices, processors, storage, and/or interfaces that together comprise elements 320-370.

Communication interface 320 may comprise a network interface, modem, port, bus, link, transceiver, or other communication device. Communication interface 320 may be distributed among multiple communication devices. Processing system 330 may comprise a microprocessor, microcontroller, logic circuit, or other processing device. Processing system 330 may be distributed among multiple processing devices. User interface 360 may comprise a keyboard, mouse, voice recognition interface, microphone and speakers, graphical display, touch screen, or other type of user interface device. User interface 360 may be distributed among multiple interface devices. Storage system 340 may comprise a disk, tape, integrated circuit, RAM, ROM, network storage, server, or other memory function. Storage system 340 may be a computer readable medium. Storage system 340 may be distributed among multiple memory devices.

Processing system 330 retrieves and executes software 350 from storage system 340. Processing system may retrieve and store data 370. Processing system may also retrieve and store data via communication interface 320. Processing system 350 may create or modify software 350 or data 370 to achieve a tangible result. Processing system may control communication interface 320 or user interface 370 to achieve a tangible result. Processing system may retrieve and execute remotely stored software via communication interface 320.

Software 350 and remotely stored software may comprise an operating system, utilities, drivers, networking software, and other software typically executed by a computer system. Software 350 may comprise an application program, applet, firmware, or other form of machine-readable processing instructions typically executed by a computer system. When executed by processing system 330, software 350 or remotely stored software may direct computer system 300 to operate as described herein.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A storage array system, comprising:
N array controllers configured with at least two interconnect fabric ports, where N is an integer greater than two;
a first interconnect fabric switch and a second interconnect fabric switch are each integrated into first and second environmental services module (ESM), respectively, each of said first and second interconnect fabric switches having at least N interconnect fabric ports, each of said N interconnect fabric ports being connected to an interconnect fabric port on one of said N array controllers thereby establishing redundant connectivity between each of said N array controllers.

2. The storage array system of claim 1, wherein each of said N array controllers may communicate dedicated data transfers with each other of said N array controllers via said first interconnect fabric switch and said second interconnect fabric switch.

3. The storage array system of claim 1 or claim 2, wherein said first interconnect fabric switch and said second interconnect fabric switch receive power from said first and second ESMs, respectively.

4. The storage array system of claim 3, wherein said first interconnect fabric switch and said second interconnect fabric switch receive cooling from a JBOD.

5. The storage array system of any one of claims 1 to 4, wherein at least one of said N array controllers further includes at least one disk drive.

6. The storage array system of any one of claims 1 to 5, wherein said interconnect fabric ports are configured as serial attached SCSI ports.

7. The storage array system of any one of claims 1 to 5, wherein said interconnect fabric ports are configured as InfiniBand ports.

8. A storage array architecture for a storage array, comprising:
at least two array controllers each having at least two integrated interconnect fabric switches;
a JBOD unit with at least two integrated interconnect fabric switches, each of said at least two integrated interconnect fabric switches being directly connected to each of said at least two array controllers at least two times thereby establishing at least two direct connections between each of said integrated interconnect fabric switches and each of said at least two array controllers.

9. The storage array architecture of claim 8, wherein said JBOD unit further includes a disk drive.

10. The storage array architecture of claim 8 or claim 9, wherein said JBOD unit is includes an environmental service module.

11. The storage array architecture of any one of claims 8 to 10, wherein at least one of said array controllers further includes at least one disk drive.

12. The storage array architecture of any one of claims 8 to 11, wherein said interconnect fabric ports are configured as serial attached SCSI ports.

13. The storage array architecture of any one of claims 8 to 11, wherein said interconnect fabric ports are configured as InfiniBand ports.

14. The storage array architecture of any one of claims 8 to 11 or the storage array system of any one of claims 1 to 5, wherein said interconnect fabric ports are configured as Ethernet ports.

15. The storage array architecture of any one of claims 8 to 11 or the storage array system of any one of claims 1 to 5, wherein said interconnect fabric ports are configured as PCI-Express ports.
